# FASCICULE DE BREVET EUROPEEN

(11) **EP 0 384 860 B1**
(45) Date de publication et mention de la délivrance du brevet: **16.06.1993**
(21) Numéro de dépôt: 90420086.2
(22) Date de dépôt: 20.02.1990
(51) Int. Cl.: C01B 11/14

(54) **Procédé de destruction des hypochlorites dans une solution de chlorate**
Verfahren zum Zerstören von Hypochloriten in einer Chloratlösung
Process for destroying hypochlorites in a chlorate solution

(30) Priorité: 22.02.1989 FR 8902535
(43) Date de publication de la demande: 29.08.1990
(73) Titulaire: ELF ATOCHEM S.A., 92800 Puteaux (FR)
(72) Inventeur: Pralus, Christian M., F-69450 Saint-Cyr-Au-Mont-D'Or (FR); Chassagne, Jean-Claude M., F-38100 Grenoble (FR)

(56) Documents cités:
- DE-A- 3 026 275

## Description

La présente invention concerne un procédé de destruction des hypochlorites, ou ions ClO⁻, dans une solution de chlorate de métal alcalin, comme une solution de chlorate de sodium, provenant de l'électrolyse d'une solution aqueuse de chlorure dudit métal alcalin, comme une solution de chlorure de sodium, avant cristallisation du chlorate.

Sauf à laisser séjourner la solution de chlorate à sa sortie de la cellule d'électrolyse dans un réacteur dit d'évolution pendant une durée incompatible avec les impératifs de production industrielle, il subsiste dans ladite solution, après évolution, suffisamment d'hypochlorites pour causer une corrosion importante du cristallisoir fait le plus généralement en acier au carbone ou en acier inoxydable.

Il est encore connu de faire intervenir dans la solution de chlorate des produits, tels que par exemple l'anhydride sulfureux, l'ammoniac, l'urée.

Mais l'anhydride sulfureux est de manipulation délicate, présente un caractère nocif et conduit à la formation de sulfates quand, dans le même temps, on s'applique à les éliminer des saumures à électrolyser.

L'ammoniac de son côté peut donner lieu à formation de chloramines qui sont elles-mêmes corrosives et qui risquent de provoquer des explosions comme c'est aussi le cas, d'après la demande de brevet européen n°0266129, lorsque l'urée est utilisée

Il est donc de l'intérêt de l'industrie de disposer d'un autre moyen que le temps ou que les composés énumérés ci-dessus pour détruire le plus complétement possible les hypochlorites dans une solution de chlorate, avant cristallisation du chlorate.

Bien que le peroxyde d'hydrogène soit connu pour réagir avec les ions ClO⁻, il n'a pas été décrit jusqu'ici un procédé de destruction de ces derniers par ce moyen dans une solution de chlorate de métal alcalin provenant de l'électrolyse d'une solution de chlorure dudit métal alcalin en présence de chrome hexavalent, généralement sous forme de bichromate tel que le bichromate de sodium Na₂Cr₂O₇, dont la présence et la conservation sont nécessaires au procédé chlorate comme le souligne par exemple la demande de brevet européen déjà citée.

On pouvait en effet dans ce cas s'attendre à la disparition du chrome hexavalent comme par exemple quand la solution de chlorate est traitée au moyen de composées soufrés tels que des sulfures solubles dans l'eau selon la demande de brevet français n°2168530.

Il a maintenant été trouvé que tel n'est pas le cas en opérant selon le procédé de l'invention qui, de plus, ne présente pas les inconvénients signalés plus haut.

La présente invention consiste en effet en un procédé pour détruire les hypochlorites sans incidence sur le chrome hexavalent présent avec eux dans une solution de chlorate de métal alcalin provenant de l'électrolyse d'une solution aqueuse de chlorure dudit métal alcalin, caractérisé en ce que ladite solution de chlorate est mise en contact avec du peroxyde d'hydrogène qui lui est ajouté en quantité telle que le rapport molaire peroxyde d'hydrogène/hypochlorites soit égal ou supérieur à 1 sans excéder 3 en assurant un rapport molaire peroxyde d'hydrogène disponible/hypochlorites égal ou supérieur à 1.

Dans la définition ainsi donnée de l'invention, le peroxyde d'hydrogène disponible est le peroxyde d'hydrogène qui n'est pas consommé dans la solution de chlorate en l'absence d'ions ClO⁻. Cette précision vaut dans tout ce qui suit.

Pour déterminer le peroxyde d'hydrogène qui peut être consommé par des composés autres que les hypochlorites, des ions métalliques par exemple, on peut utiliser la solution de chlorate comme dans l'invention mais dans laquelle les ions ClO⁻ ont disparu pratiquement quantitativement grâce à une durée d'évolution suffisamment longue de la solution initiale de chlorate.

Il n'est généralement pas nécessaire dans le cadre de l'invention que le rapport molaire peroxyde d'hydrogène disponible/hypochlorites soit supérieur à 1,1.

Lorsqu'il est ajouté à la solution de chlorate plus de peroxyde d'hydrogène qu'il n'en faut pour assurer un rapport molaire peroxyde d'hydrogène disponible/hypochlorites égal à 1,1, et ce jusqu'à environ 3 moles de peroxyde d'hydrogène ajouté par mole d'hypochlorites, il n'a pas été constaté d'incidence sur le chrome hexavalent en laissant la solution de chlorate et le peroxyde d'hydrogène qui lui est ajouté pendant une durée 5 à 10 fois plus longue que celle qui suffit dans les autres cas et qui est alors de l'ordre par exemple de 5 minutes et même moins.

Le peroxyde d'hydrogène est engagé sous forme de solution aqueuse, par exemple une solution à 50 % de peroxyde d'hydrogène en poids.

Le procédé de l'invention trouve un intérêt industriel particulier dans le cas de la fabrication du chlorate de sodium quand la solution aqueuse de chlorate dans laquelle les hypchlorites doivent être détruits est celle qui sort du réacteur d'évolution comme dit plus haut.

Ladite solution peut alors contenir par exemple, par litre : 200 g. à 700 g., souvent environ 500 g. à 600 g. de chlorate de sodium, 100 g. à 200 g. de chlorure de sodium, 0,2 g. à 10 g., souvent environ 3 g. à 6 g. de bichromate de sodium Na₂Cr₂O₇, une quantité d'ions ClO⁻ correspondant à une quantité de NaClO de 0,1 g. à 1,5 g.

Les valeurs de la température et du pH auxquelles est réalisée la destruction des ions ClO⁻ sont pratiquement celles qu'a habituellement la solution de chlorate à sa sortie du réacteur d'évolution. Par exemple, celle du pH, maintenue avantageusement la plus constante possible, est comprise entre environ 5,5 et 7, celle de la température est comprise entre d'assez larges limites, par exemple entre environ 40°C et 80°C, souvent entre 60°C et 70°C.

Le réacteur de destruction des hypochlorites est naturellement de préférence un réacteur agité, avec évent. Il est fait en un matériau qui peut par exemple être à base de chlorure de polyvinyle renforcé.

La destruction des hypochlorites est pratiquement totale en procédant selon l'invention ; la teneur finale en ions ClO⁻, exprimée en NaClO, est inférieure généralement à environ 10 mg/l, le plus souvent même inférieure à 2 mg/l.

Le bon déroulement de la destruction des hypochlorites peut être suivi en relation avec la valeur du potentiel redox de la solution de chlorate mesurée avec une électrode de référence au calomel et une électrode de mesure en platine.

Dire que la destruction des hypochlorites n'a pas d'incidence sur le chrome hexavalent signifie que la disparition du chrome à la valence 6⁺ est négligeable et égale le plus généralement à moins de 0,01 % et souvent à moins de 0,001 %.

Les exemples suivants, donnés à titre indicatif mais non limitatif, illustrent le procédé de l'invention dans une mise en oeuvre qui se trouve être continue.

### Exemple 1 :

Une solution de chlorate de sodium qui a été produite par électrolyse d'une solution aqueuse de chlorure de sodium en présence de chrome hexavalent sous forme de bichromate de sodium, puis a séjourné durant 3 heures dans un réacteur d'évolution, contient, par litre : 500 g. de chlorate de sodium, 150 g. de chlorure de sodium, 0,26 g. d'hypochlorites ou ions ClO⁻ exprimés en NaClO et aussi 4 g. de bichromate de sodium Na₂Cr₂O₇. Elle ne renferme pas, à côté des ions ClO⁻ de composé provoquant une décomposition sensible du peroxyde d'hydrogène.

A cette solution, qui ici s'écoule en continu, est ajoutée en continu une quantité de peroxyde d'hydrogène en solution aqueuse à 50 % en poids de peroxyde d'hydrogène, telle que le rapport molaire peroxyde d'hydrogène/hypochlorites soit égal à 1.

Cette addition de peroxyde d'hydrogène se fait juste avant l'entrée de la solution de chlorate dans un réacteur de destruction des hypochlorites agité grâce à la recirculation externe de son contenu.

Dans le réacteur de destruction le temps de séjour de la solution de chlorate additionnée de la solution de peroxyde d'hydrogène est de 2 minutes, la température égale à 70°C et le pH égal à 5,8.

A la sortie du réacteur de destruction, la solution de chlorate d'où le chlorate sera ensuite séparé par cristallisation, contient par litre moins de 2 mg d'hypochlorites exprimés en NaClO tandis que 0,006 % seulement du chrome initialement à la valence 6⁺ sous forme de bichromate ne se trouve plus à cette valence.

### Exemple 2 :

L'exemple 1 est répété mais en ajoutant à la solution de chlorate le peroxyde d'hydrogène de façon à ce que le rapport molaire peroxyde d'hydrogène/hypochlorites soit égal à 1,1.

Les ions ClO⁻ sont détruits avec la même efficacité que dans l'exemple 1 tandis que la quantité de chrome qui ne se retrouve pas sous la forme Cr⁶⁺ à la sortie du réacteur de destruction ne dépasse pas 0,01 % de la quantité de Cr⁶⁺ intialement sous forme de bichromate de sodium.

### Exemple 3 :

Des résultats analogues à ceux atteints dans les exemples 1 et 2 sont obtenus en procédant de façon similaire à celle décrite dans ces deux exemples mais avec une solution de chlorate contenant, par litre, 605 g. de chlorate de sodium, 105 g. de chlorure de sodium, 5 g. de bichromate de sodium et 1,3 g. d'ions ClO⁻ exprimés en NaClO, et, dans le réacteur de destruction, un pH égal à 6, une température égale à 68°C et un temps de séjour égal à 6 minutes.

### Exemple 4 :

A une solution de chlorate de sodium de composition comme dans l'exemple 1 mais renfermant des composés dont on a déterminé qu'ils occasionnent en absence d'hypochlorites la destruction d'une partie du peroxyde d'hydrogène ajouté à ladite solution, est ajoutée une quantité de peroxyde d'hydrogène telle que le rapport molaire peroxyde d'hydrogène/hypochlorites soit égal à 2 pour avoir un rapport molaire peroxyde d'hydrogène disponible/hypochlorites égal à 1,1.

En opérant comme dans l'exemple 1 mais avec un séjour de la solution de chlorate avec le peroxyde d'hydrogène ajouté égal à 20 minutes, le résultat obtenu, tant en ce qui concerne la destruction des hypochlorites que la conservation des ions Cr⁶⁺, est analogue à celui constaté dans l'exemple 1.

## Revendications

1. Procédé pour détruire les hypochlorites, ou ions ClO⁻, sans incidence sur le chrome hexavalent présent avec eux, dans une solution de chlorate de métal alcalin provenant de l'électrolyse d'une solution aqueuse de chlorure dudit métal alcalin, caractérisé en ce que ladite solution de chlorate est mise en contact avec du peroxyde d'hydrogène qui lui est ajouté en quantité telle que le rapport molaire peroxyde d'hydrogène/hypochlorites soit égal au moins à 1 sans excéder 3 en assurant un rapport molaire peroxyde d'hydrogène disponible/hypochlorites égal ou supérieur à 1.

2. Procédé selon la revendication 1, caractérisé en ce que le peroxyde d'hydrogène est ajouté à la solution de chlorate après évolution de celle-ci.

3. Procédé selon l'une des revendications 1 et 2, caractérisé en ce que le peroxyde d'hydrogène est ajouté à la solution de chlorate contenant par litre une quantité d'ions ClO⁻ exprimés en NaClO égale ou inférieure à 1,5 g.

4. Procédé selon l'une des revendications 1 à 3, caractérisé en ce que la destruction des hypochlorites est réalisée à un pH compris entre 5,5 et 7.

5. Procédé selon l'une des revendications 1 à 4, caractérisé en ce que la destruction des hypochlorites est réalisée à une température comprise entre 40°C et 80°C.

6. Procédé selon l'une des revendications 1 à 5, caractérisé en ce que le rapport molaire peroxyde d'hydrogène disponible/hypochlorites n'est pas supérieur à 1,1.

## Patentansprüche

1. Verfahren zur Zerstörung von Hypochloriten oder ClO⁻-Ionen ohne Auswirkung auf das gemeinsam mit ihnen vorhandene sechswertige Chrom in einer Alkalichloratlösung, die aus der Elektrolyse einer wäßrigen Chloridlösung dieses Alkalimetalls stammt, dadurch gekennzeichnet, daß die Chloratlösung mit Wasserstoffperoxid zusammengebracht wird, welches ihr in einer solchen Menge zugesetzt ist, daß das Molverhältnis Wasserstoffperoxid/Hypochlorite wenigstens 1 und höchstens 3 zur Gewährleistung eines Molverhältnisses von verfügbarem Peroxid/Hypochlorite von größer oder gleich 1 ist.

2. Verfahren nach Anspruch 1, dadurch gekennzeichnet, daß das Wasserstoffperoxid zur Chloratlösung nach deren Entwicklung zugegeben wird.

3. Verfahren nach Anspruch 1 oder 2, dadurch gekennzeichnet, daß das Wasserstoffperoxid zu einer Chloratlösung zugegeben wird, die, ausgedrückt als NaClO, eine ClO⁻-Ionenmenge von gleich oder kleiner 1,5 g pro l enthält.

4. Verfahren nach einem der Ansprüche 1 bis 3, dadurch gekennzeichnet, daß die Zerstörung der Hypochlorite bei einem pH-Wert zwischen 5,5 und 7 durchgeführt wird.

5. Verfahren nach einem der Ansprüche 1 bis 4, dadurch gekennzeichnet, daß die Zerstörung der Hypochlorite bei einer Temperatur zwischen 40 und 80°C durchgeführt wird.

6. Verfahren nach einem der Ansprüche 1 bis 5, dadurch gekennzeichnet, daß das Molverhältnis von verfügbarem Wasserstoffperoxid/Hypochlorite nicht größer als 1,1 ist.

## Claims

1. Process for destroying hypochlorites or ClO⁻ ions, without affecting the hexavalent chromium present with them, in an alkali metal chlorate solution arising from the electrolysis of an aqueous chloride solution of the said alkali metal, characterised in that the said chlorate solution is brought into contact with hydrogen peroxide which is added to it in a quantity such that the hydrogen peroxide/hypochlorites molar ratio is equal to at least 1 without exceeding 3, ensuring an available hydrogen peroxide/hypochlorites molar ratio which is equal to or greater than 1.

2. Process according to Claim 1, characterised in that hydrogen peroxide is added to the chlorate solution after development of the latter.

3. Process according to one of Claims 1 and 2, characterised in that hydrogen peroxide is added to the chlorate solution containing, per litre, a quantity of ClO⁻ ions expressed in NaClO equal to or less than 1.5 g.

4. Process according to one of Claims 1 to 3, characterised in that the destruction of hypochlorites is carried out at a pH between 5.5 and 7.

5. Process according to one of Claims 1 to 4, characterised in that the destruction of hypochlorites is carried out at a temperature between 40°C and 80°C.

6. Process according to one of Claims 1 to 5, characterised in that the available hydrogen peroxide/hypochlorites molar ratio is not greater than 1.1.
